# NEUE EUROPÄISCHE PATENTSCHRIFT

(11) **EP 2 386 357 B3**
(45) Veröffentlichungstag dieser Patentschrift: **14.01.2015**
(45) Hinweis auf die Patenterteilung: 28.11.2012
(21) Anmeldenummer: 11173230.1
(22) Anmeldetag: 10.09.2008
(51) Int. Cl.: B01L 3/00, G01N 21/03

(54) **Mikroküvetten-Anordnung und deren Verwendung**
Micro-cuvette assembly and its application
Agencement de micro-cuvettes et son utilisation

(30) Priorität: 01.10.2007 CH 15152007
(43) Veröffentlichungstag der Anmeldung: 16.11.2011
(62) Teilanmeldung aus: 08164052.6
(73) Patentinhaber: Tecan Trading AG, 8708 Männedorf (CH)
(72) Erfinder: Gotschy, Walter, 5421 Adnet (AT); Grassl, Josef, 83471 Schönau am Königsee (DE); Payr, Fritz, 5020 Salzburg (AT); Schürf, Markus, 83346 Bergen / Bernhaupten (DE)
(74) Vertreter: OK pat AG

(56) Entgegenhaltungen:
- EP-A- 0 075 605
- EP-A- 0 834 729
- WO-A-02/087763
- FR-A- 2 363 098
- US-A- 4 722 598

## Beschreibung

Die Erfindung betrifft gemäss dem Oberbegriff des unabhängigen Anspruchs 1 eine Mikroküvetten-Anordnung, die eine erste Teilplatte mit einer oder mehreren ersten Küvettenflächen und eine gegenüber der ersten anordenbare, zweite Teilplatte mit mindestens einer oder mehreren zweiten Küvettenflächen umfasst. Diese zweiten Küvettenflächen sind in einer Aktivposition der Mikroküvetten-Anordnung planparallel zu den ersten Küvettenflächen im Register angeordnet und um eine Distanz von diesen beabstandet. Dadurch sind in der Aktivposition der Mikroküvetten-Anordnung eine oder mehrere Mikroküvetten ausgebildet, in denen je ein vorgängig auf eine der Küvettenflächen aufgebrachtes Flüssigkeitsvolumen zwischen diesen beiden Küvettenflächen gehalten wird. Dabei weist jede dieser Teilplatten bevorzugt je eine regelmässige Anordnung von mehreren Küvettenflächen auf, wobei speziell bevorzugt wird, dass diese regelmässigen Anordnungen von mehreren Küvettenflächen als lineares Array mit 8 Küvettenflächen oder als ein ganzzahliges Vielfaches von solchen linearen, parallel zueinander angeordneten Arrays ausgebildet sind.

Mikroplatten zum Bereitstellen von einer Vielzahl von sogenannten "virtuellen Wells" sind aus dem Stand der Technik bekannt. Beispielsweise offenbart US 6,565,813 B1 solche Mikroplatten mit einem dem Format einer Standardmikroplatte ähnlichen Format. Dabei wird auf zwei einander angenäherten Teilplatten aus Glas je ein Array von verhältnismässig wasserfreundlichen ("hydrophilen") Domänen bereitgestellt, die sich im Register gegenüberstehen. Die hydrophilen Domänen sind typischerweise von einem wasserabstossenden ("hydrophoben") Feld aus Teflon^{®} (DuPont) umgeben, welches beispielsweise mittels Siebdruck aufgebracht wird. Die Flüssigkeitsvolumina werden so zwischen den beiden hydrophilen Domänen eines solchen "virtuellen Wells" aufgespannt und am Ort gehalten. Alternative Ausführungsformen mit oxidativ hydrophilisierten Domänen für die Proben sind ebenfalls beschrieben. Diese beispielsweise zum High Throughput Screening verwendeten Mikroplatten werden bevorzugt zum Herstellen von Versuchsmischungen mit Reagenzien von sehr geringen Volumina von 100 nl bis 10 µl verwendet, deren Resultate z.B. Mittels Fluorometrie ausgewertet werden können. Allerdings eignen sich diese Mikroplatten nicht für Absorptionsmessungen, weil die Weglängen in den "virtuellen Wells" nicht genügend genau definiert sind.

Ein Photometer zum Durchführen solcher Absorptionsmessungen ist aus US 6,628,382 B2 und US 6,809,826 B2 bekannt. Zwischen zwei sich angenäherten Flächen von zwei Bauteilen wird ein Flüssigkeitstropfen auf Grund seiner Oberflächenspannung aufspannt und diesen Tropfen wird mittels in den beiden Bauteilen enthaltenen optischen Fasern durchleuchtet. Eine möglichst grosse Weglänge zum Erreichen eines möglichst grossen Messsignals bei der Durchstrahlung wird dadurch erreicht, dass der Tropfen durch ein Auseinanderbewegen der beiden Bauteile gestreckt wird. Diese Vorrichtung wird zum Durchführen von einzelnen Messungen an einer kleinen Anzahl Proben angewendet; allerdings erscheint sie zum automatisierten Ausführen von Untersuchungen an vielen Proben ungeeignet. Die Verdampfungsrate bei solchen Vorrichtungen, in denen ein einzelnes Flüssigkeitsvolumen mit grosser Höhe (Weglänge) aber sehr geringem Durchmesser untersucht wird, ist recht gross.

Diese beiden aus dem Stand der Technik bekannten Vorrichtungen zum Bereitstellen von virtuellen Wells sind einerseits recht aufwändig in der Herstellung und eigenen sich andererseits nur bedingt oder gar nicht zum automatisierten Untersuchen einer grossen Anzahl von Flüssigkeitsproben.

Die Aufgabe der vorliegenden Erfindung ist es, eine alternative Vorrichtung vorzuschlagen, welche die aus dem Stand der Technik bekannten Nachteile eliminiert oder zumindest minimiert.

Die gestellte Aufgabe wird gemäss einem ersten Aspekt durch die Merkmale des unabhängigen Anspruchs 1 gelöst.

Zusätzliche bevorzugte und erfinderische Merkmale ergeben sich aus den abhängigen Ansprüchen.

Vorteile der erfindungsgemässen Mikroküvetten-Anordnung umfassen:
- Es werden eine oder eine grössere Anzahl von Mikroküvetten geschaffen, die alle eine genau definierte Höhe aufweisen, so dass über die dadurch präzise festgelegte optische Weglänge und die Messung der optischen Dichte das manuelle und/oder automatische Bestimmen der Konzentration eines bestimmten Inhaltsstoffes in einer Flüssigkeitsprobe gemäss dem Lambert-Beer'schen Gesetz ermöglicht wird.
- Es können Absorptionsmessungen an sehr kleinen Volumina und mit definierter Weglänge durchgeführt werden.
- Die Mikroküvetten-Anordnung kann eine zu einer Standardmikroplatte praktisch identische Grundfläche aufweisen. Sie wird dadurch zu einem Adapter, der das Durchführen von automatischen Absorptionsmessungen in

Mikroküvetten mit einem Standard-Mikroplattenreader ermöglicht.
- Durch das Durchstrahlen eines grossen Teils des Volumens einer dünnen Flüssigkeitsprobe mit Licht erfolgt die Absorptionsmessung an unterschiedlichen Stellen derselben Probe. Dadurch wird eine mögliche, durch inhomogene Proben hervorgerufene Fehleranfälligkeit der Messung erheblich reduziert.
- Dank den grossen, durch die Körper der erfindungsgemässen Mikroküvetten-Anordnung bereitgestellten Küvettenflächen, wird der Einfluss der Verdunstung der Flüssigkeit einer untersuchten Probe minimiert.

Im Folgenden wird die erfindungsgemässe Mikroküvetten-Anordnung und deren Verwendung an Hand von beispielhaften und schematischen, den Umfang der Erfindung nicht einschränkenden Zeichnungen erläutert. Dabei zeigen:
- Fig. 1: eine Draufsicht auf eine offene Mikroküvetten-Anordnung gemäss einer ersten oder zweiten Ausführungsform;
- Fig. 2: einen vertikalen Schnitt durch die Mikroküvetten-Anordnung in Fig. 1, in der Aktivposition gemäss der ersten Ausführungsform;
- Fig. 3: einen vertikalen Schnitt durch die Mikroküvetten-Anordnung in Fig. 1, in der Aktivposition gemäss der zweiten Ausführungsform;
- Fig. 4: eine Draufsicht auf eine offene Mikroküvetten-Anordnung gemäss einer dritten Ausführungsform;
- Fig. 5: einen vertikalen Schnitt durch die Mikroküvetten-Anordnung in Fig. 4, in der Aktivposition gemäss der dritten Ausführungsform;
- Fig. 6: einen vertikalen Teilschnitt durch eine offene Mikroküvetten-Anordnung gemäss einer ersten und zweiten Variante der ersten und dritten Ausführungsform;
- Fig. 7: einen vertikalen Teilschnitt durch eine geschlossene und beladene Mikroküvette einer Mikroküvetten-Anordnung in der Aktivposition gemäss einer bevorzugten Variante der ersten und dritten Ausführungsform.

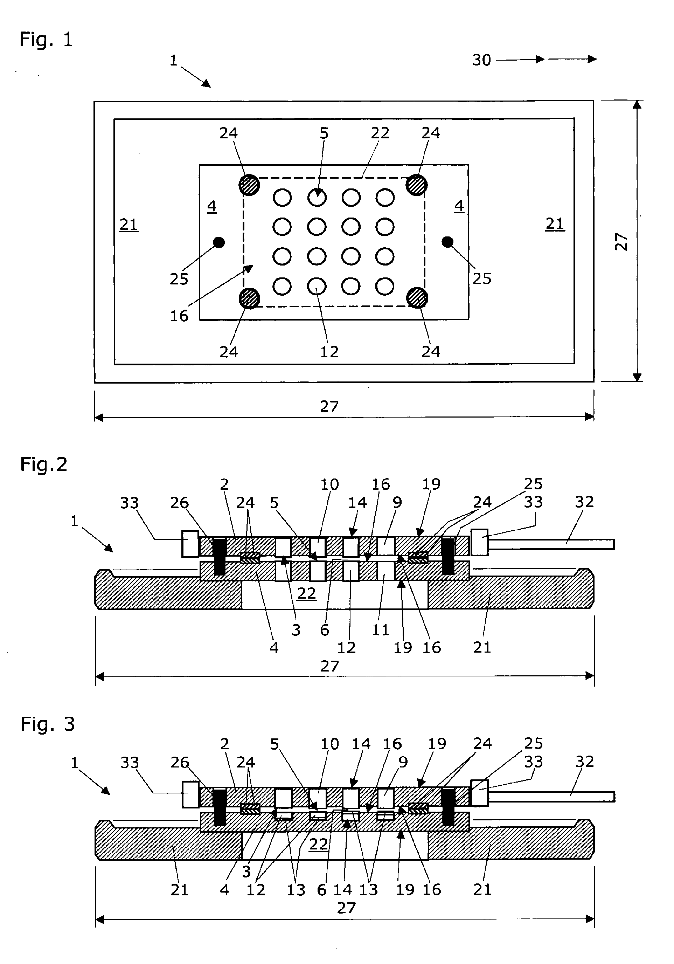

Figur 1 zeigt eine Draufsicht auf eine offene Mikroküvetten-Anordnung gemäss einer ersten oder zweiten Ausführungsform. Die Mikroküvetten-Anordnung 1 umfasst eine erste Teilplatte 2 mit einer oder mehreren ersten Küvettenflächen 3 und eine gegenüber der ersten anordenbare, zweite Teilplatte 4 mit mindestens einer oder mehreren zweiten Küvettenflächen 5. Diese zweiten Küvettenflächen 5 sind in einer Aktivposition der Mikroküvetten-Anordnung 1 (vgl. Fig. 2) planparallel zu den ersten Küvettenflächen 3 im Register angeordnet und um eine Distanz 6 von diesen beabstandet. Dadurch wird in der Aktivposition der Mikroküvetten-Anordnung 1 eine oder mehrere Mikroküvetten 7 ausgebildet, in denen je ein vorgängig auf eine der Küvettenflächen 3,5 aufgebrachtes Flüssigkeitsvolumen 8 zwischen diesen beiden Küvettenflächen 3,5 gehalten wird. Dieses Halten eines Flüssigkeitsvolumens 8 zwischen den beiden sich gegenüber liegenden Küvettenflächen 3,5 der beiden Teilplatten 2,4 der Mikroküvetten-Anordnung 1 beruht vorzugsweise auf der Oberflächenspannung dieses Flüssigkeitsvolumens 8. Dabei werden die beiden Küvettenflächen 3,5 durch die Flüssigkeit benetzt. Jede der ersten Küvettenflächen 3 der ersten Teilplatte 2 ist gemäss der vorliegenden Erfindung individuell und vollständig durch eine Oberfläche je eines als freistrahloptisches Element ausgebildeten, in je einer die erste Teilplatte 2 durchdringenden Öffnung 9 angeordneten, transparenten Körpers 10 gebildet (vgl. Figuren 1-7).

Im Zusammenhang mit der Erfindung gilt, dass die Nummerierung dieser Teilplatten willkürlich ist, und dass die speziellen Anordnungen untereinander vertauschbar sind und als entsprechend alternative Ausführungsformen beansprucht werden. So kann (wie in Fig. 1 dargestellt) die erste Teilplatte 2 gegenüber der zweiten Teilplatte 4 anordenbar sein. Tatsächlich ist in Figur 1 nur die zweite Teilplatte 4 dargestellt, um die Draufsicht auf die Küvettenflächen 5 der als freistrahloptisches Element ausgebildeten, transparenten Körper 10 zu ermöglichen. Der transparente Körper 10 ist vorzugsweise aus einem Material gebildet, das aus einer Gruppe ausgewählt ist, welche Glas, Quarzglas, Kunststoff und Keramik umfasst, das für die verwendeten elektromagnetischen Wellen durchlässig ist und einen Brechungsindex aufweist, welcher die Verwendung als freistrahloptisches Element zulässt.

Wie jedem Fachmann bekannt ist, beruht eine Freistrahloptik auf dem Prinzip der freien Ausbreitung von Lichtstrahlen, welche durch Linsen und andere klassische optische Elemente eine bewusste Führung erfahren. Im Gegensatz zur Freistrahloptik beruht eine Faseroptik, wie diese beispielsweise aus US 6,628,382 B2 bekannt ist, auf dem Prinzip der Totalreflexion im Inneren eines Lichtleiters. Die Verwendung von freistrahloptischen transparenten Körpern 10 erlaubt das Bestrahlen der Proben mit einer Beleuchtung, die einen grossen Querschnitt aufweist; zudem ist die Divergenz der Lichtstrahlen beim Austritt aus den freistrahloptischen, transparenten Körpern 10 einstellbar und in keinem Fall so gross wie bei einer Faseroptik.

Als "Mikroplatten" werden im Zusammenhang mit der vorliegenden Erfindung alle Multiwellplatten bezeichnet, die eine Vielzahl an Wells oder Behälter aufweisen, welche in einem Array angeordnet sind. Speziell bevorzugte Mikroplatten weisen zumindest annähernd die Masse und den Footprint (Grundfläche) einer Mikroplatte nach dem SBS Standard auf, wie dieser vom American National Standards Institute (ANSI) veröffentlicht wurde. Wenngleich viele unterschiedliche Formen und Dimensionen von Wells bekannt sind, so ist doch allen Standardmikroplatten gemeinsam, dass sie eine normierte Grundfläche, also einen normierten Footprint aufweisen, und dass der Achsabstand der jeweils in einem Array angeordneten Wells ebenfalls normiert ist. Dieser Achsabstand beträgt z.B. bei 24-Well (4 x 6) Platten 18 mm, bei 96-Well (8 x 12) Platten 9 mm und bei 384-Well (16 x 24) Platten 4.5 mm. Alle diese Standardmikroplatten sind aus Kunststoff gefertigte Verbrauchsartikel und werden üblicherweise nur einmal verwendet und dann entsorgt.

In der in Fig. 1 gezeigten, ersten Ausführungsform der Erfindung ist jede der zweiten Küvettenflächen 5 der zweiten Teilplatte 4 individuell und vollständig durch eine Oberfläche je eines als freistrahloptisches Element ausgebildeten, in je einer die zweite Teilplatte 4 durchdringenden Öffnung 11 angeordneten, transparenten Körpers 12 gebildet (vgl. auch Fig. 2).

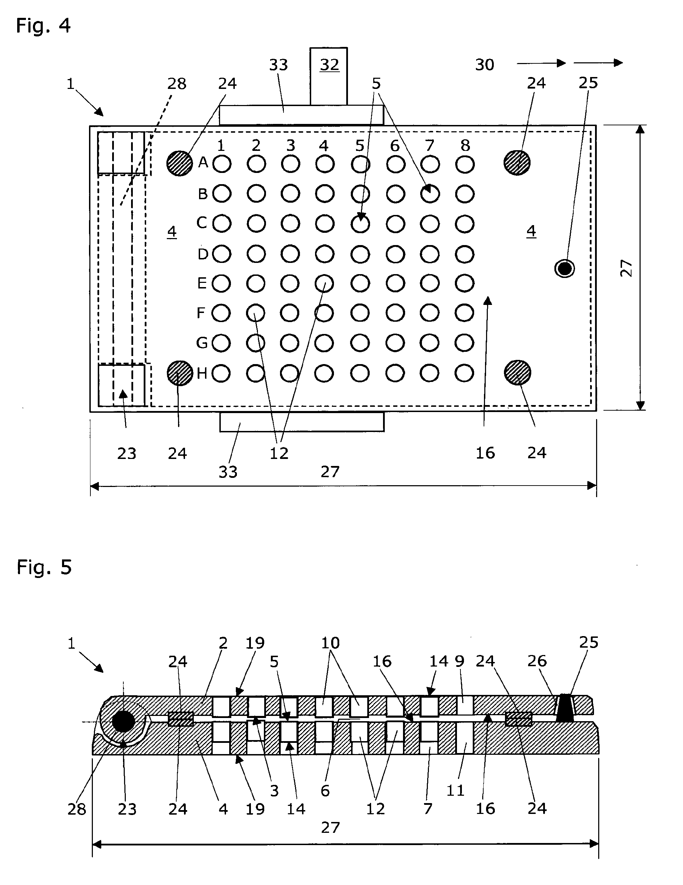

Vorzugsweise bestehen alle transparenten Körper 10,12 aus Quarzglas, so dass die Durchstrahlung der transparenten Körper 10,12 mit Licht einer Wellenlänge von 200 bis 1000 nm möglich ist. Besonders bevorzugt sind die transparenten Körper 10,12 im Wesentlichen zylindrisch ausgebildet; dabei bestehen die Küvettenflächen 3 der ersten Teilplatte 2 oder die Küvettenflächen 3,5 der ersten und zweiten Teilplatten 2,4 aus ersten Kreisflächen solcher Zylinder (vgl. auch Fig. 5). Alternativ können die transparenten Körper 10 auch aus einem Material gebildet sein, das aus einer Gruppe ausgewählt ist, welche Glas, Kunststoff und Keramik umfasst, für die verwendeten elektromagnetischen Wellen durchlässig ist und einen Brechungsindex aufweist, welcher die Verwendung als freistrahloptisches Element zulässt.

Die ersten und zweiten Ausführungsformen der erfindungsgemässen Mikroküvetten-Anordnung 1 umfassen je eine Basisplatte 21 mit einer Aussparung 22 (vgl. Fig. 2 und 3), wobei die zweite Teilplatte 4 als diese Aussparung 22 überspannend ausgebildet und an der Basisplatte 21 fixiert ist. Die Küvettenflächen 3 der zweiten Teilplatte 4 sind im Bereich dieser Aussparung 22 (gestrichelt gezeichnet in Fig. 1) angeordnet.

Bevorzugt umfassen die erste und zweite Teilplatte 2,4 Distanzhalter 24, welche so zum gegenseitigen Beaufschlagen ausgebildet sind, dass in der Aktivposition der Mikroküvetten-Anordnung 1 die fixe Distanz 6 zwischen allen einander gegenüber stehenden Küvettenflächen 3,5 einer Mikroküvetten-Anordnung 1 definiert ist. Zum definieren einer genügend exakten Register-Position der Küvettenflächen 3,5 umfasst die zweite Teilplatte 4 vorzugsweise Führungsstifte 25, welche in der Aktivposition der Mikroküvetten-Anordnung 1 in entsprechende Vertiefungen 26 der ersten Teilplatte 2 eintauchend ausgebildet sind.

Um die automatisierte Verwendung der Mikroküvetten-Anordnung 1 in einem Standard-Mikroplattenreader zu ermöglichen, weist die erfindungsgemässe Mikroküvetten-Anordnung 1 bevorzugt eine zu einer Standardmikroplatte praktisch identische Grundfläche 27 auf. Zumindest soll, gemäss einer ersten und zweiten Ausführungsform der erfindungsgemässen Mikroküvetten-Anordnung 1, die Basisplatte 21 eine Grundfläche 27 aufweisen, die zumindest annähernd der Grundfläche einer Standardmikroplatte entspricht.

Wie aus der Figur 1 ersichtlich ist, umfasst die zweite Teilplatte 4 eine regelmässige Anordnung von mehreren Küvettenflächen 5. Dargestellt ist ein 4 x 4 Array. Bevorzugt sind hingegen regelmässige Anordnungen von mehreren Küvettenflächen 5 als lineares Array mit 8 oder 12 Küvettenflächen 5. Besonders bevorzugt sind dabei ganzzahlige Vielfache von solchen linearen, parallel zueinander angeordneten Arrays, so dass sich zwei oder mehr parallele Reihen von 8 oder 12 Küvettenflächen 5 ergeben. Speziell bevorzugt sind solche Arrays von Küvettenflächen 5, die einen regelmässigen Achsabstand entsprechend dem Achsabstand der Wells von Standardmikroplatten aufweisen (vgl. Fig. 4).

Figur 2 zeigt einen vertikalen Schnitt durch die Mikroküvetten-Anordnung in Fig. 1, in der Aktivposition gemäss der ersten Ausführungsform. Die erste Teilplatte 2 der Mikroküvetten-Anordnung 1 mit mehreren ersten Küvettenflächen 3 liegt auf der zweiten Teilplatte 4 mit der gleichen Anzahl von zweiten Küvettenflächen 5.

In dieser Aktivposition der Mikroküvetten-Anordnung 1 sind die beiden Küvettenflächen 3,5 einer Mikroküvette 7 planparallel zu einander und im Register angeordnet sowie um eine Distanz 6 von einander beabstandet. Ein vorgängig auf eine der Küvettenflächen 5 mittels einer Pipette von Hand unter Verwendung eines Liquidhandling Systems aufgebrachtes Flüssigkeitsvolumen 8 wird in dieser Mikroküvette 7 zwischen diesen beiden Küvettenflächen 3,5 gehalten (vgl. Figuren 1-7).

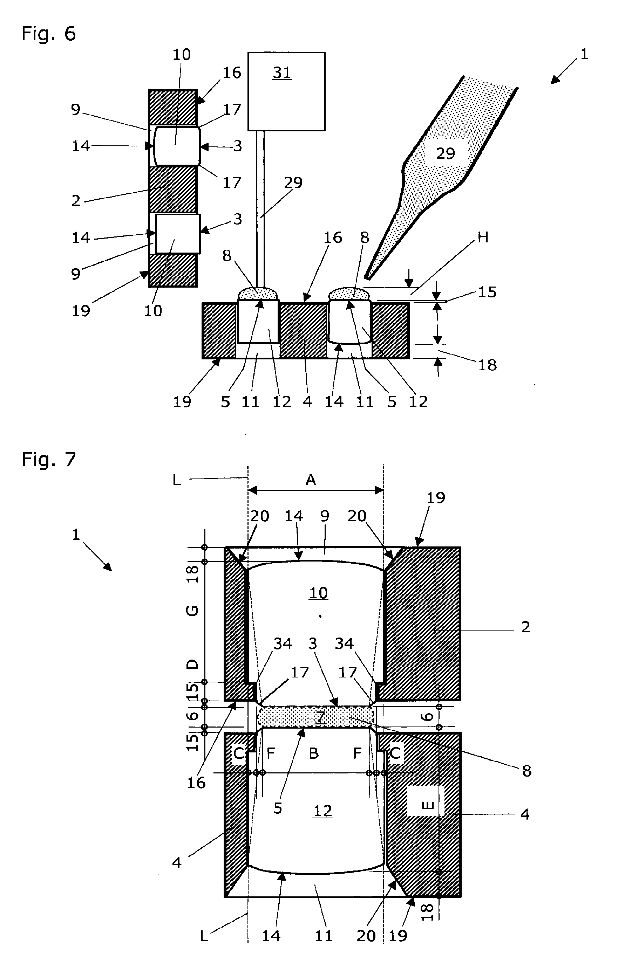

Die erste Ausführungsform der Mikroküvetten-Anordnung 1 ist dadurch gekennzeichnet, dass jede der ersten Küvettenflächen 3 der ersten Teilplatte 2 und der zweiten Küvettenflächen 5 der zweiten Teilplatte 4 individuell und vollständig durch eine Oberfläche je eines als freistrahloptisches Element ausgebildeten, in je einer die erste Teilplatte 2 oder die zweite Teilplatte 4 durchdringenden Öffnung 9,11 angeordneten, transparenten Körpers 10,12 gebildet ist. In der Figur 2 wurden die transparenten Körper 10,12 in den ganz rechts angeordneten Öffnungen 9,11 in der ersten und zweiten Teilplatte 2,4 weggelassen, um zu zeigen, dass diese Öffnungen 9,11 die Teilplatten 2,4 vollständig durchdringen. Eine vergrösserte Darstellung dieses Querschnitts ist in der Figur 7 dargestellt.

Figur 2 zeigt zudem, wie ein Robotergreifer 33 eines Roboters 32 verwendet wird, um die erste Teilplatte 2 auf der zweiten Teilplatte 4 zu positionieren und/oder um die erste Teilplatte 2 von der zweiten Teilplatte 4 abzuheben. Die erste Ausführungsform der erfindungsgemässen Mikroküvetten-Anordnung 1 umfasst eine Basisplatte 21 mit einer Grundfläche 27, die zumindest annähernd der Grundfläche einer Standardmikroplatte entspricht.

Figur 3 zeigt einen vertikalen Schnitt durch die Mikroküvetten-Anordnung in Fig. 1, in der Aktivposition gemäss der zweiten Ausführungsform. Wie schon bei der ersten Ausführungsform liegt die erste Teilplatte 2 der Mikroküvetten-Anordnung 1 mit mehreren ersten Küvettenflächen 3 auf der zweiten Teilplatte 4 mit der gleichen Anzahl von zweiten Küvettenflächen 5. Auch in dieser Aktivposition der Mikroküvetten-Anordnung 1 sind die beiden Küvettenflächen 3,5 einer Mikroküvette 7 planparallel zu einander und im Register angeordnet sowie um eine Distanz 6 von einander beabstandet. Ein vorgängig auf eine der Küvettenflächen 5 mittels einer Pipette von Hand oder unter Verwendung eines Liquidhandling Systems aufgebrachtes Flüssigkeitsvolumen 8 wird in dieser Mikroküvette 7 zwischen diesen beiden Küvettenflächen 3,5 gehalten.

Die zweite Ausführungsform der Mikroküvetten-Anordnung 1 ist dadurch gekennzeichnet, dass jede der ersten Küvettenflächen 3 der ersten Teilplatte 2 individuell und vollständig durch eine Oberfläche je eines als freistrahloptisches Element ausgebildeten, in je einer die erste Teilplatte 2 durchdringenden Öffnung 9 angeordneten, transparenten Körpers 10 gebildet ist, und dass jede der zweiten Küvettenflächen 5 der zweiten Teilplatte 4 individuell und vollständig durch eine Oberfläche je eines in der zweiten Teilplatte 4 angeordneten Spiegels 13 gebildet ist. Jeder dieser Spiegel 13 ist an der Küvettenfläche 5 verspiegelt oder er umfasst einen als freistrahloptisches Element ausgebildeten, transparenten Körper 12, der eine verspiegelte Rückseite 14 aufweist.

Wie gesagt umfassen die ersten und zweiten Ausführungsformen der erfindungsgemässen Mikroküvetten-Anordnung 1 je eine Basisplatte 21 mit einer Aussparung 22 (vgl. Fig. 2 und 3), wobei die zweite Teilplatte 4 als diese Aussparung 22 überspannend ausgebildet und an der Basisplatte 21 fixiert ist. Die Küvettenflächen 3 der zweiten Teilplatte 4 sind im Bereich dieser Aussparung 22 (gestrichelt gezeichnet in Fig. 1) angeordnet.

Auch in der zweiten Ausführungsform wird bevorzugt, dass alle transparenten Körper 10,12 aus Quarzglas bestehen, so dass die Durchstrahlung der transparenten Körper 10,12 mit Licht einer Wellenlänge von 200 bis 1000 nm möglich ist. Besonders bevorzugt sind die transparenten Körper 10,12 im Wesentlichen zylindrisch ausgebildet; dabei bestehen die Küvettenflächen 3 der ersten Teilplatte 2 oder die Küvettenflächen 3,5 der ersten und zweiten Teilplatten 2,4 aus ersten Kreisflächen solcher Zylinder (vgl. auch Fig. 5). Dies trifft auch für Spiegel 13 zu, falls diese einen rückseitig verspiegelten transparenten Körper 10 umfassen (vgl. die linken beiden Spiegel 13 in Fig. 3). Gleichfalls ist bevorzugt, dass alle Spiegel 13, unabhängig davon, ob diese an ihrer Vorderseite (vgl. die rechten beiden Spiegel 13 in Fig. 3) oder Rückseite verspiegelt sind, eine kreisförmige Küvettenfläche 5 definieren.

Der in Figur 3 gezeigte Robotergreifer 33 eines Roboters 32 kann auch dazu verwendet werden, um die Grundplatte 21 mit der zweiten Teilplatte 4 auf der Oberfläche eines Arbeitsplatzes (z.B. auf der Oberfläche eines Mikroplatten-Carriers einer Workstation) zu positionieren und/oder um die Grundplatte 21 mit der ersten und zweiten Teilplatte 2,4 von der Oberfläche eines Arbeitsplatzes abzuheben und in einen Standard-Mikroplattenreader zu übergeben. Dies ist auch deshalb möglich, weil die zweite Ausführungsform der erfindungsgemässen Mikroküvetten-Anordnung 1 eine Basisplatte 21 mit einer Grundfläche 27 umfasst, die zumindest annähernd der Grundfläche einer Standardmikroplatte entspricht.

Figur 4 zeigt eine Draufsicht auf eine offene Mikroküvetten-Anordnung gemäss einer dritten Ausführungsform. Die zweite Teilplatte 4 der Mikroküvetten-Anordnung 1 umfasst hier 64 zweite Küvettenflächen 5. Die gegenüber dieser zweiten Teilplatte 4 anordenbare, erste Teilplatte 2 wurde entfernt und ist hier nur gestrichelt gezeichnet. Selbstverständlich weisen beide Teilplatten 2,4 die gleiche Anzahl und Verteilung von ersten und zweiten Küvettenflächen 3,5 auf, die in einer Aktivposition der Mikroküvetten-Anordnung 1 (vgl. Fig. 5) planparallel zu einander im Register angeordnet und um eine Distanz 6 voneinander beabstandet sind. Dadurch werden in der Aktivposition dieser hier dargestellten Mikroküvetten-Anordnung 1 64 Mikroküvetten 7 ausgebildet, in denen je ein vorgängig auf eine der Küvettenflächen 3,5 aufgebrachtes Flüssigkeitsvolumen 8 zwischen diesen beiden Küvettenflächen 3,5 gehalten wird.

Die dritte Ausführungsform der Mikroküvetten-Anordnung 1 ist dadurch gekennzeichnet, dass jede der ersten Küvettenflächen 3 der ersten Teilpatte 2 und der zweiten Küvettenflächen 5 der zweiten Teilplatte 4 individuell und vollständig durch eine Oberfläche je eines als freistrahloptisches Element ausgebildeten, in je einer die erste Teilplatte 2 oder die zweite Teilplatte 4 durchdringenden Öffnung 9,11 angeordneten, transparenten Körper 10,12 gebildet ist. Die dritte Ausführungsform der erfindungsgemässen Mikroküvetten-Anordnung 1 umfasst eine erste Teilplatte 2 und eine zweite Teilplatte 4, die über ein Gelenk 23 mit einer Achse 28 miteinander verbunden sind, mittels welchem eine dieser Teilplatten 2,4 zum Erstellen der Aktivposition der Mikroküvetten-Anordnung 1 auf die andere Teilplatte 4,2 schwenkbar ist.

Bevorzugt umfasst die erste und zweite Teilplatte 2,4 Distanzhalter 24, welche so zum gegenseitigen Beaufschlagen ausgebildet sind, dass in der Aktivposition der Mikroküvetten-Anordnung 1 die fixe Distanz 6 zwischen allen einander gegenüber stehenden Küvettenflächen 3,5 einer Mikroküvetten-Anordnung 1 definiert ist. Vorzugsweise umfasst die zweite Teilplatte 4 Führungsstifte 25, welche in der Aktivposition der Mikroküvetten-Anordnung 1 in entsprechende Vertiefungen 26 der ersten Teilplatte 2 eintauchend ausgebildet sind. Besonders bevorzugt weist die zweite Teilplatte 4 eine Grundfläche 27 auf, die zumindest annähernd der Grundfläche einer Standardmikroplatte entspricht.

Wie aus der Figur 4 ersichtlich ist, umfasst die zweite Teilplatte 4 eine regelmässige Anordnung von mehreren Küvettenflächen 5. Dargestellt ist ein 8 x 8 Array. Bevorzugt sind hingegen regelmässige Anordnungen von mehreren Küvettenflächen 5 als lineares Array mit 8 oder 12 Küvettenflächen 5. Besonders bevorzugt sind dabei ganzzahlige Vielfache von solchen linearen, parallel zueinander angeordneten Arrays, so dass sich zwei oder mehr parallele Reihen von 8 oder 12 Küvettenflächen 5 ergeben. Speziell bevorzugt sind solche Arrays von Küvettenflächen 5, die einen regelmässigen Achsabstand entsprechend dem Achsabstand der Wells von Standardmikroplatten aufweisen. Entsprechend der Bezeichnung der Wells einer Standardmikroplatte können deshalb wie gezeigt auch die Küvettenflächen 5, auf welchen die Flüssigkeitsvolumina 8 deponiert werden sollen, in Kolonnen 1-8 oder 1-12 (nicht gezeigt) und in Reihen A-H identifiziert werden. Der in Figur 4 gezeigte Robotergreifer 33 eines Roboters 32 kann auch dazu verwendet werden, um die Mikroküvetten-Anordnung 1 auf der Oberfläche eines Arbeitsplatzes (z.B. auf der Oberfläche eines Mikroplatten-Carriers einer Workstation) zu positionieren, wo die Flüssigkeitsvolumina mittels eines Liquidhandling Systems 31 (vgl. Fig. 6) auf die Küvettenflächen 5 abgegeben werden können. Zudem können solche Mikroküvetten-Anordnungen 1 mit dem Robotergreifer 33 des Roboters 32 in einen Standard-Mikroplattenreader 30 (siehe Doppelpfeil) übergeben werden, wo Absorptionsmessungen an den in den Mikroküvetten 7 gehaltenen Flüssigkeitsvolumina 8 durchgeführt werden können. Dies ist auch deshalb möglich, weil die dritte Ausführungsform der erfindungsgemässen Mikroküvetten-Anordnung 1 eine zweite Teilplatte 4 mit einer Grundfläche 27 umfasst, die zumindest annähernd der Grundfläche einer Standardmikroplatte entspricht. Mit der erfindungsgemässen Mikroküvetten-Anordnung 1 können auch Lumineszenzmessungen und/oder Fluoreszenzmessungen in sehr kleinen Flüssigkeitsvolumina 8 von üblicherweise 1 µl bis 10 µl, speziell bevorzugt von 2 µl, durchgeführt werden.

Figur 5 zeigt einen vertikalen Schnitt durch die Mikroküvetten-Anordnung in Fig. 4, in der Aktivposition gemäss der dritten Ausführungsform. Auch hier wurden die transparenten Körper 10,12 in den ganz rechts angeordneten Öffnungen 9,11 in der ersten und zweiten Teilplatte 2,4 weggelassen., um zu zeigen, dass diese Öffnungen 9,11 die Teilplatten 2,4 vollständig durchdringen. Eine vergrösserte Darstellung dieses Querschnitts ist in der Figur 7 dargestellt. Die Elemente der hier gezeigten dritten Ausführungsform entsprechend weitestgehend den Elemente der ersten Ausführungsform (vgl. Fig. 2) und sind weiter oben näher beschrieben.

Abweichend von der Darstellung in Fig. 5 und in Anlehnung an Fig. 3 ist eine weitere Variante der erfindungsgemässen Mikroküvetten-Anordnung 1 vorstellbar (nicht gezeigt), gemäss welcher jede der ersten Küvettenflächen 3 der ersten Teilplatte 2 individuell und vollständig durch eine Oberfläche je eines als freistrahloptisches Element ausgebildeten, in je einer die erste Teilplatte 2 durchdringenden Öffnung 9 angeordneten, transparenten Körpers 10 gebildet ist, wobei jede der zweiten Küvettenflächen 5 der zweiten Teilplatte 4 individuell und vollständig durch eine Oberfläche je eines in der zweiten Teilplatte 4 angeordneten Spiegels 13 gebildet ist. Jeder dieser Spiegel 13 ist an der Küvettenfläche 5 verspiegelt oder er umfasst einen als freistrahloptisches Element ausgebildeten transparenten Körper 12, der eine verspiegelte Rückseite 14 aufweist.

Figur 6 zeigt einen vertikalen Teilschnitt durch eine offene Mikroküvetten-Anordnung gemäss einer ersten und zweiten Variante der ersten und dritten Ausführungsform, wie diese bereits beschrieben wurden. An Hand dieser Figur soll aufgezeigt werden, dass eine weitestgehend symmetrische Anordnung der beiden als freistrahloptisches Element ausgebildeten, transparenten Körper 10,12 angestrebt wird. Um sicher zu stellen, dass eine Mikroküvette 7 mit einer bevorzugten Höhe von 0.5 mm gut gefüllt wird, sollen beim Einnehmen der Aktivposition der beiden Teilplatten 2,4 einer Mikroküvetten-Anordnung 1, beide Küvettenflächen 3,5 einer Mikroküvette 7 praktisch vollständig benetzt werden. Die Tropfenhöhe H, die eine Flüssigkeitsvolumen 8 nach dem Auftragen auf eine Küvettenfläche 3,5 haben soll, beträgt deshalb etwas mehr als die 0.5 mm der Distanz 6; bevorzugt wird eine Tropfenhöhe H von ca. 0.6 mm. Wie angedeutet kann das Aufbringen der Flüssigkeitsvolumina 8 auf die Küvettenflächen 3,5 mittels einer Handpipette oder automatisiert mittels einer Pipette 29 eines Liquidhandling Systems 31 erfolgen.

Zudem werden hier speziell bevorzugte Ausführungsdetails offenbart. Diese umfassen die speziell bevorzugte Bedingung, dass die Küvettenflächen 3,5 der transparenten Körper 10,12 und der Spiegel 13 um ein Überstehmass 15 über die an diese optischen Elemente angrenzenden, ersten Oberflächen 16 der Teilplatten 2,4 herausstehen. Es wurde überraschenderweise festgestellt, dass ein Überstehmass 15 von wenigen Hunderstelmillimeter, insbesondere von 0.05 mm, genügt, um zu verhindern, dass ein auf eine Küvettenfläche 3,5 aufgetragenes Flüssigkeitsvolumen 8 diese Küvettenfläche 3,5 spontan wieder verlässt. Ganz speziell trifft diese Beobachtung zu, wenn die transparenten Körper 10,12 aus Quarzglas bestehen und wenn die ersten Oberflächen 16 der Teilplatten 2,4 aus eloxiertem Aluminium bestehen; dabei wird die Wahl eines schwarz matt eloxierten Aluminiums bzw. einer schwarz matt eloxierten Aluminiumlegierung besonders bevorzugt. Diese Beobachtung ist umso erstaunlicher, weil es sich gezeigt hat, dass die eloxierte Aluminiumoberfläche hydrophiler ist im Vergleich zur hydrophoberen, feinpolierten Quarzoberfläche der transparenten Körper 10,12. Die Anordnung eines solchen Überstehmasses 15 hat zudem den Vorteil, dass beim Feinschleifen und Feinpolieren der Küvettenflächen 3,5 der transparenten Körper 10,12 keine Teilchen aus der jeweiligen Teilplatte, 2,4 ausgebrochen und auf die transparenten Körper übertragen werden können.

Um die Reinigung der Küvettenflächen 3,5 der transparenten Körper 10,12 einfacher durchführen zu können, weisen die Küvettenflächen 3,5 der transparenten Körper 10,12 und der Spiegel 13 bevorzugt eine gebrochene Kante 17 auf, die als umlaufende Fase oder Rundung ausgebildet ist. So kann verhindert werden, dass sich beim Abwischen der Küvettenflächen 3,5 an einer scharfen Kante Fussel bilden, welche dann zusätzlich wieder von den Küvettenflächen 3,5 entfernt werden müssen. Trotz dem Brechen der Kante 17 verbleiben eine Küvettenfläche 3,5 aufgetragene Flüssigkeitsvolumina 8 auf dieser Küvettenfläche 3,5. Bevorzugt beträgt das Überstehmass 15 0.05 mm und der Kantenbruch ist vorzugsweise als 45°-Fase über das ganze Überstehmass ausgebildet.

Um zu verhindern, dass beim Hantieren mit der erfindungsgemässen Mikroküvetten-Anordnung 1 auf den Rückseiten 14 der transparenten Körper 10,12 Fettspuren von Fingerabdrücken oder auch Kratzer entstehen können, werden diese transparenten Körper 10,12 bevorzugt so in den Teilplatten 2,4 montiert, dass ihre Rückseite 14 um ein Rücksprungmass 18 gegenüber einer zweiten Oberfläche 19 einer der beiden Teilplatten 2,4 abgesetzt ist. Dieses Rücksprungmass 18 beträgt vorzugsweise etwa 1.1 mm.

Figur 7 zeigt einen vertikalen Teilschnitt durch eine geschlossene und beladene Mikroküvette einer Mikroküvetten-Anordnung in der Aktivposition gemäss einer bevorzugten Variante der ersten und dritten Ausführungsform. Die hier gezeigte Mikroküvetten-Anordnung 1 umfasst eine erste Teilplatte 2 mit einer ersten Küvettenfläche 3 und eine gegenüber der ersten anordenbare, zweite Teilplatte 4 mit einer zweiten Küvettenfläche 5, die in einer Aktivposition der Mikroküvetten-Anordnung 1 planparallel zu der ersten Küvettenfläche 3 im Register angeordnet und um eine Distanz 6 von dieser beabstandet ist, wodurch in der Aktivposition der Mikroküvetten-Anordnung 1 eine Mikroküvette 7 ausgebildet ist, in der ein vorgängig auf die Küvettenfläche 5 aufgebrachtes Flüssigkeitsvolumen 8 zwischen diesen beiden Küvettenflächen 3,5 gehalten wird. Die Flüssigkeitsvolumina 8 der erfindungsgemässen Mikroküvetten-Anordnung 1 betragen üblicherweise 1 µl bis 10 µl, speziell bevorzugt sind Flüssigkeitsvolumina 8 von 2 µl.

Die erste Küvettenfläche 3 der ersten Teilplatte 2 ist individuell und vollständig durch eine Oberfläche eines als freistrahloptisches Element ausgebildeten, in einer die erste Teilplatte 2 durchdringenden Öffnung 9 angeordneten, transparenten Körpers 10 gebildet. Ebenso ist in dieser symmetrischen Anordnung die zweite Küvettenfläche 5 der zweiten Teilplatte 4 individuell und vollständig durch eine Oberfläche eines als freistrahloptisches Element ausgebildeten, in einer die zweite Teilplatte 4 durchdringenden Öffnung 11 angeordneten transparenten Körpers 12 gebildet.

Beide transparenten Körper 10,12 bestehen aus Quarzglas (vorzugsweise SQ2 von SCHOTT AG, D-55122 Mainz, Deutschland) und sind im wesentlichen zylindrisch ausgebildet, wobei die Küvettenfläche 3 der ersten Teilplatte 2 und die Küvettenfläche 5 der zweiten Teilplatte 4 aus ersten Kreisflächen solcher Zylinder besteht. Die Teilplatten sind aus eloxiertem Aluminium bzw. einer eloxierten Aluminiumlegierung gefertigt, vorzugsweise aus schwarz matt eloxiertem AIMg4,5Mn.

Die Küvettenflächen 3,5 der transparenten Körper 10,12 stehen bevorzugt um ein Überstehmass 15 von 0.05 mm über die an diese optischen Elemente angrenzenden, ersten Oberflächen 16 der Teilplatten 2,4 heraus und weisen eine gebrochene Kante 17 auf, die als umlaufende 45°-Fase ausgebildet ist. Diese transparenten Körper 10,12 sind so in den Teilplatten 2,4 montiert, dass ihre Rückseite 14 um ein Rücksprungmass 18 von 1.1 mm gegenüber einer zweiten Oberfläche 19 einer der beiden Teilplatten 2,4 abgesetzt ist. Die transparenten Körper 10,12 umfassen eine Rückseite 14, die eine Linsenform aufweist, wodurch auf die Rückseite 14 der transparenten Körper 10,12 eingestrahltes Licht L auf deren Küvettenfläche 3,5 konzentriert wird. Somit weisen beide transparenten Körper identische freistrahloptische Merkmale auf, wie z.B. eine Eintrittsöffnung A (mit einem bevorzugten Durchmesser von 2.5 mm) für in den transparenten Körper 10,12 einfallendes Licht und eine Austrittsöffnung B (mit einem bevorzugten Durchmesser von 2.0 mm) für aus dem transparenten Körper 10,12 in die Mikroküvette 7 eintretendes Licht, wobei die Austrittsöffnung gerade der Küvettenfläche 3,5 entspricht.

In der Figur 7 entsprechen die Bezugszeichen speziell bevorzugten Massen der erfindungsgemässen transparenten Körper 10,12, wobei C der Auskragung bzw. dem Mass von 0.15 mm eines Kragens 34 entspricht, welcher in den Teilplatten 2,4 ausgeformt ist und welcher der Positionierung der transparenten Körper 10,12 in den Öffnungen 9,11 der Teilplatten 2,4 dient. Die Kragentiefe D beträgt hier 0.5 mm. Die Höhe E der transparenten Körper beträgt ca. 4 mm. Die 45°-Fase misst 0.05 mm. Der zylinderförmige Teil des transparenten Körpers ist 3.0 mm hoch. Die Distanz 6 misst hier 0.5 mm mit einer maximalen Toleranz von +/- 5/1000 mm. Die Öffnungen 9,11, welche die erste oder die zweite Teilplatte 2,4 durchdringen, umfassen je einen Konus 20, welcher an die Rückseite 10 der transparenten Körper 10,12 anschliesst.

Die bisher beschriebene, erfindungsgemässe Mikroküvetten-Anordnung 1 eignet sich vorzüglich zur Durchführung eines Verfahrens zum Untersuchen von biologischen Proben. Bei diesem Verfahren wird mindestens ein zu untersuchendes Flüssigkeitsvolumen 8 auf eine der Küvettenflächen 3,5 aufgetragen und die andere Küvettenfläche 5,3 in Kontakt zu diesem Flüssigkeitsvolumen 8 gebracht. Danach werden beide Küvettenflächen 3,5 so in eine planparallele Position im Register und in einer Distanz 6 zueinander gebracht, dass in dieser Aktivposition der Mikroküvetten-Anordnung 1 mindestens eine Mikroküvette 7 gebildet wird, in der das Flüssigkeitsvolumen 8 zwischen diesen beiden Küvettenflächen 3,5 gehalten wird.

Ein entsprechendes Verfahren ist dadurch gekennzeichnet, dass jede der ersten Küvettenflächen 3 der ersten Teilplatte 2 individuell und vollständig durch eine Oberfläche je eines als freistrahloptisches Element ausgebildeten, in je einer die erste Teilplatte 2 durchdringenden Öffnung 9 angeordneten, transparenten Körpers 10 gebildet ist, wobei jeweils einer dieser transparenten Körper 10 und das Flüssigkeitsvolumen 8, das sich zwischen den zwei in einer fixen Distanz 6 zueinander gehaltenen Küvettenflächen 3,5 befindet, mit Licht durchstrahlt werden.

Falls jede der zweiten Küvettenflächen 5 der zweiten Teilplatte 4 individuell und vollständig durch eine Oberfläche je eines als freistrahloptisches Element ausgebildeten, in je einer die zweite Teilplatte 4 durchdringenden Öffnung 11 angeordneten, transparenten Körpers 12 gebildet ist, werden jeweils beide transparenten Körper 10,12 und das Flüssigkeitsvolumen 8, das sich zwischen den zwei in einer fixen Distanz 6 zueinander gehaltenen Küvettenflächen 3,5 einer Mikroküvetten-Anordnung 1 befindet, mit Licht in einer Richtung durchstrahlt. Bei diesem speziellen Verfahren entsprechend einer ersten Ausführungsform beträgt somit die Weglänge des Lichts im zu untersuchenden Flüssigkeitsvolumen 8 von 0.5 mm.

Falls jede der zweiten Küvettenflächen 5 der zweiten Teilplatte 4 individuell und vollständig durch eine Oberfläche je eines in der zweiten Teilplatte 4 angeordneten Spiegels 13 gebildet ist, wird jeweils zumindest ein transparenter Körper 10 und das Flüssigkeitsvolumen 8, das sich zwischen den zwei in einer fixen Distanz 6 zueinander gehaltenen Küvettenflächen 3,5 einer Mikroküvetten-Anordnung 1 befindet, mit Licht in zwei Richtungen durchstrahlt werden. Dieses spezielle Verfahren entsprechend einer zweiten Ausführungsform verdoppelt somit die Weglänge des Lichts im zu untersuchenden Flüssigkeitsvolumen 8 auf total 1.0 mm. Dadurch ergibt sich beim Durchführen von Absorptionsmessungen ein verbessertes Signal/Rausch-Verhältnis, insbesondere bei Proben mit geringer Absorption.

Beide Ausführungsformen des Verfahrens unter Verwendung der erfindungsgemässen Mikroküvetten-Anordnung 1 ermöglichen unterschiedliche Ausführungsvarianten.

So kann vorgesehen sein, dass in einem Flüssigkeitsvolumen 8, das sich zwischen den zwei in einer fixen Distanz 6 zueinander gehaltenen Küvettenflächen 3,5 der Mikroküvetten-Anordnung 1 befindet, eine oder zwei Messungen mit Licht einer oder zwei Wellenlängen, die innerhalb einer oder zwei Absorptionsbanden einer zu untersuchenden Probe liegen, ausgeführt werden. Besonders bevorzugt sind dabei Absorptionsmessungen mit Licht einer Wellenlänge im Bereich von 260 nm (der Absorptionsbande von Nukleinsäuren) und/oder mit Licht einer Wellenlänge im Bereich von 280 nm (der Absorptionsbande von Proteinen).

Wird in einem Flüssigkeitsvolumen 8 je eine Messung mit Licht einer Wellenlänge im Bereich von 260 nm und im Bereich von 280 nm ausgeführt, so kann das Verhältnis der beiden Absorptionswerte für dieses Flüssigkeitsvolumen 8 festgestellt und als Mass für die Reinheit der im Flüssigkeitsvolumen 8 vorhandenen Nukleinsäure genommen werden.

Zusätzlich zu den eben erwähnten einzelnen oder zweifachen Absorptionsmessungen werden vorzugsweise Referenzmessungen mit Licht einer Wellenlänge, die ausserhalb einer oder ausserhalb zweier Absorptionsbanden einer zu untersuchenden Probe liegt, z.B. mit Licht im nahen UV-Bereich mit Wellenlängen zwischen 300 und 400 nm ausgeführt. Je nach dem verwendeten Mikroplattenreader werden für solche Referenzmessungen - entsprechend den aktuellen Geräteeigenschaften -Wellenlängen im Bereich von beispielsweise 310 oder 315 nm speziell bevorzugt. Referenzmessungen mit Licht mit einer Wellenlänge von 400 bis 1000 nm sind ebenfalls bevorzugt.

Weil die zweite Teilplatte 4 der Mikroküvetten-Anordnung 1 oder eine Basisplatte 21 an einer zweiten Teilplatte 4 der Mikroküvetten-Anordnung 1 vorzugsweise eine Grundfläche 27 umfasst, die zumindest annähernd der Grundfläche einer Standardmikroplatte entspricht, so können die sich zwischen zwei in einer fixen Distanz 6 zueinander gehaltenen Küvettenflächen 3,5 einer Mikroküvetten-Anordnung 1 befindenden Flüssigkeitsvolumina 8 mit Licht eines Standard-Mikroplattenreaders 30 durchstrahlt werden.

Wie allgemein bekannt, sind die Konzentration einer in einem Flüssigkeitsvolumen gelösten Substanz und die optische Absorption dieses Flüssigkeitsvolumens über das Lambert-Beer'sche Gesetz (*A* = *c* * ε * *I*) mit einander verknüpft.

Dabei gelten:
- A =: optische Absorption
- c =: Konzentration des gelösten Stoffes [M = Mol/L]
- ε =: Molarer Extinktionskoeffizient des gelösten Stoffes [1/(M*cm)]
- / =: Schichtdicke der Flüssigkeit oder Weglänge, die das Licht durchlaufen muss)[cm].

Durch das präzise Festlegen der Weglänge, d.h. der Distanz 6 zwischen den beiden Küvettenflächen 3,5 einer oder vieler Mikroküvetten 7 einer erfindungsgemässen Mikroküvetten-Anordnung 1 werden hochreproduzierbare Resultate erzielt.

Gleiche Merkmale oder Elemente der erfindungsgemässen Mikroküvetten-Anordnung 1 sind jeweils mit gleichen Bezugszeichen versehen, auch wenn diese Elemente nicht in allen Fällen im Detail beschrieben sind. Kombinationen der gezeigten bzw. beschriebenen Ausführungsformen gehören zum Umfang der vorliegenden Erfindung.

Alle beschriebenen Absorptionsmessungen in einem Standard-Mikroplattenreader und alle beschriebenen Transporte mit einem Roboter können automatisiert durchgeführt werden.

**Bezugszeichenliste:**

| | | | |
|---|---|---|---|
| 1 | Mikroküvetten-Anordnung | 25 | Führungsstifte |
| 2 | erste Teilplatte | 26 | Vertiefungen |
| 3 | erste Küvettenflächen | 27 | Grundfläche |
| 4 | zweite Teilplatte | 28 | Achse |
| 5 | zweite Küvettenflächen | 29 | Pipette |
| 6 | Distanz | 30 | Mikroplattenreader |
| 7 | Mikroküvetten | 31 | Liquidhandling System |
| 8 | Flüssigkeitsvolumen | 32 | Roboter |
| 9 | Öffnung in 2 | 33 | Robotergreifer |
| 10 | transparenter Körper in 2 | 34 | Kragen |
| 11 | Öffnung in 4 | | |
| 12 | transparenter Körper in 4 | A | Eintrittsöffnung |
| 13 | Spiegel | B | Austrittsöffnung |
| 14 | Rückseite des transparenten Körpers | C | Kragenmass |
| | | D | Kragentiefe |
| 15 | Überstehmass | E | Höhe des transparenten |
| 16 | erste Oberflächen von 2,4 | | Körpers |
| 17 | gebrochene Kante | F | Fase |
| 18 | Rücksprungmass | G | Zylinder |
| 19 | zweite Oberflächen von 2,4 | H | Tropfenhöhe |
| 20 | Konus | L | Licht |
| 21 | Basisplatte | | |
| 22 | Aussparung | | |
| 23 | Gelenk | | |
| 24 | Distanzhalter | | |

## Patentansprüche

1. Mikroküvetten-Anordnung (1) zum Untersuchen von biologischen Proben mit einer ersten Teilplatte (2), die eine oder mehrere erste Küvettenflächen (3) umfasst, und mit einer gegenüber der ersten anordenbaren, zweiten Teilplatte (4), die eine oder mehrere zweite Küvettenflächen (5) umfasst, wobei in einer Aktivposition der Mikroküvetten-Anordnung (1) die zweiten Küvettenflächen (5) planparallel zu den ersten Küvettenflächen (3) im Register angeordnet und um eine definierte Distanz (6) von den ersten Küvettenflächen (3) beabstandet sind, wodurch in der Aktivposition der Mikroküvetten-Anordnung (1) eine oder mehrere Mikroküvetten (7) ausgebildet sind, wobei die erste und zweite Teilplatte (2,4) im Register zu den Küvettenflächen (3,5) angeordnete Öffnungen (9,11) und diese Küvettenflächen (3,5) vollständig bereitstellende transparente Körper (10,12) umfassen und die erste und die zweite Teilpatte (2,4) von diesen Öffnungen (9,11) vollständig durchdrungen sind, und wobei die transparenten Körper (10,12) aus einem anderen Material als die Teilplatten (2,4) gefertigt sind und diese Öffnungen (9,11) auf der Seite einer ersten Oberfläche (16) aber nicht auf der Seite einer zweiten Oberfläche (19) der Teilplatten (2,4) abdecken, **dadurch gekennzeichnet, dass** die ersten und zweiten Küvettenflächen einer Mikroküvette (7) in der Aktivposition der Mikroküvetten-Anordnung (1) von einem vorgängig auf eine der Küvettenflächen (3,5) aufgebrachten Flüssigkeitsvolumen (8) benetzt sind, so dass dieses Flüssigkeitsvolumen (8) zwischen diesen beiden Küvettenflächen (3,5) dieser Mikroküvette (7) gehalten ist, wobei jede Mikroküvette (7) frei ist von Oberflächen, die das Flüssigkeitsvolumen (8) über die definierte Distanz (6) kontaktieren.

2. Mikroküvetten-Anordnung (1) nach Anspruch 1, **dadurch gekennzeichnet, dass** die jeweils im Register angeordneten Küvettenflächen (3,5) und Öffnungen (9,11) der ersten und zweiten Teilplatte (2,4) in einem regelmässigen Abstand zueinander angeordnet sind, welcher dem Achsabstand der Wells von Standardmikroplatten gemäss ANSI-Standard entspricht.

3. Mikroküvetten-Anordnung (1) nach Anspruch 1 oder 2, **dadurch gekennzeichnet, dass** jeder transparente Körper (10,12) zumindest teilweise in die erste Oberfläche (16) der ersten Teilpatte (2) oder der zweiten Teilplatte (4) eingesenkt angeordnet ist.

4. Mikroküvetten-Anördnung (1) nach einem der vorhergehenden Ansprüche, **dadurch gekennzeichnet, dass** die ersten Oberflächen (16) der ersten und zweiten Teilpatte (2,4) aus eloxiertem Aluminium oder einer eloxierten Aluminiumlegierung bestehen.

5. Mikroküvetten-Anordnung (1) nach Anspruch 4, **dadurch gekennzeichnet, dass** die erste und zweite Teilpatte (2,4) aus schwarz matt eloxiertem Aluminium oder einer schwarz matt eloxierten Aluminiumlegierung bestehen.

6. Mikroküvetten-Anordnung (1) nach Anspruch 4 oder 5, **dadurch gekennzeichnet, dass** die transparenten Körper aus Glas, Quarzglas, Kunststoff oder Keramik bestehen.

7. Mikroküvetten-Anordnung (1) nach einem der vorhergehenden Ansprüche, **dadurch gekennzeichnet, dass** die erste Teilplatte (2) und die zweite Teilplatte (4) über ein Gelenk (23) miteinander verbunden sind, mittels welchem eine dieser Teilplatten (2,4) zum Erstellen der Aktivposition der Mikroküvetten-Anordnung (1) auf die andere Teilplatte (4,2) schwenkbar ist.

8. Mikroküvetten-Anordnung (1) nach einem der vorhergehenden Ansprüche, **dadurch gekennzeichnet, dass** die erste und zweite Teilplatte (2,4) Distanzhalter (24) umfassen, welche so zum gegenseitigen Beaufschlagen ausgebildet sind, dass in der Aktivposition der Mikroküvetten-Anordnung (1) eine fixe Distanz (6) zwischen allen einander gegenüber stehenden Küvettenflächen (3,5) einer Mikroküvetten-Anordnung (1) definiert ist.

9. Mikroküvetten-Anordnung (1) nach einem der vorhergehenden Ansprüche, **dadurch gekennzeichnet, dass** die zweite Teilplatte (4) Führungsstifte (25) umfasst, welche in der Aktivposition der Mikroküvetten-Anordnung (1) in entsprechende Vertiefungen (26) der ersten Teilplatte (2) eintauchend ausgebildet sind.

10. Mikroküvetten-Anordnung (1) nach einem der vorhergehenden Ansprüche, **dadurch gekennzeichnet, dass** die zweite Teilplatte (4) oder eine Basisplatte (21) eine Grundfläche (27) aufweist, die zumindest annähernd der Grundfläche einer Standardmikroplatte gemäss ANSI-Standard entspricht.

## Claims

1. A microcuvette arrangement (1) for studying biological samples having a first partial plate (2), which comprises one or more first cuvette surfaces (3), and having a second partial plate (4), which can be arranged in relation to the first partial plate and which comprises one or more second cuvette surfaces (5), in an active position of the microcuvette arrangement (1), the second cuvette surfaces (5) being arranged in register and plane parallel to the first cuvette surfaces (3) and being spaced apart by a defined distance (6) from the first cuvette surfaces (3), whereby one or more microcuvettes (7) are formed in the active position of the micro-cuvette arrangement (1), the first and second partial plates (2,4) comprising openings (9,11), which are arranged in register to the cuvette surfaces (3,5), and transparent bodies (10,12) entirely providing these cuvette surfaces (3,5), and the first and the second partial plates (2,4) being completely penetrated by these openings (9,11), and the transparent bodies (10,12) being manufactured from a different material than the partial plates (2,4) and covering these openings (9,11) on the side of a first surface (16) of the partial plates (2,4), **characterized in that** the first and second cuvette surfaces of a microcuvette (7) are wetted in the active position of the microcuvette arrangement (1) by a liquid volume (8) previously applied to one of the cuvette surfaces (3,5), so that this liquid volume (8) is held between these two cuvette surfaces (3,5) of this microcuvette (7), wherein each microcuvette (7) is free from surfaces that contact the liquid volume (8) across the defined distance (6).

2. The microcuvette arrangement (1) according to Claim 1, **characterized in that** the respective cuvette surfaces (3,5) and openings (9,11) of the first and second partial plates (2,4), which are arranged in register in each case, are arranged at a regular distance to one another, which corresponds to the axial distance of the wells of standard microplates according to ANSI standard.

3. The microcuvette arrangement (1) according to Claim 1 or 2, **characterized in that** each transparent body (10,12) is arranged at least partially recessed into the first surface (16) of the first partial plate (2) or the second partial plate (4).

4. The microcuvette arrangement (1) according to one of the preceding claims, **characterized in that** the first surfaces (16) of the first and second partial plates (2,4) consist of anodized aluminum or an anodized aluminum alloy.

5. The microcuvette arrangement (1) according to Claim 4, **characterized in that** the first and second partial plates (2,4) consist of matte black anodized aluminum or a matte black anodized aluminum alloy.

6. The microcuvette arrangement (1) according to Claim 4 or 5, **characterized in that** the transparent bodies consist of glass, quartz glass, plastic, or ceramic.

7. The microcuvette arrangement (1) according to one of the preceding claims, **characterized in that** the first partial plate (2) and the second partial plate (4) are connected to one another via a joint (23), by means of which one of these partial plates (2,4) is pivotable on to the other partial plate (4,2) to create the active position of the microcuvette arrangement (1).

8. The microcuvette arrangement (1) according to one of the preceding claims, **characterized in that** the first and second partial plates (2,4) comprise spacers (24), which are formed for mutual impingement so that in the active position of the microcuvette arrangement (1), the fixed distance (6) between all opposing cuvette surfaces (3,5) of a microcuvette arrangement (1) is defined.

9. The microcuvette arrangement (1) according to one of the preceding claims, **characterized in that** the second partial plate (4) comprises guide pins (25), which are formed to plunge into corresponding depressions (26) of the first partial plate (2) in the active position of the microcuvette arrangement (1).

10. The microcuvette arrangement (1) according to one of the preceding claims, **characterized in that** the second partial plate (4) or a base plate (21) has a footprint (27) which at least approximately corresponds to the footprint of a standard microplate according to ANSI standard.

## Revendications

1. Agencement de micro-cuvettes (1) pour l'analyse d'échantillons biologiques, comprenant une première plaque partielle (2) présentant une ou plusieurs premières surfaces de cuvettes (3), et une seconde plaque partielle (4) pouvant être disposée à l'opposé de la première et comportant une ou plusieurs secondes surfaces de cuvettes (5) qui, dans une position active de l'agencement de micro-cuvettes (1), sont disposées parallèlement aux premières surfaces de cuvettes (3) dans un repère et sont éloignées de celles-ci d'une distance (6) définie, ce qui fait qu'en position active de l'agencement de micro-cuvettes (1) il est formé une ou plusieurs micro-cuvettes (7), dans lequel la première et la seconde plaques partielles (2,4) comprennent des ouvertures (9,11) agencées du côté des surfaces de cuvettes (3,5) dans le repère, ces surfaces de cuvettes (3,5) entièrement comprenant des corps transparents affectés (10,12), la première et la seconde plaques partielles (2, 4) étant totalement traversées par ces ouvertures (9,11) et dans lequel, les corps transparents (10,12) sont fabriqués à partir d'un autre matériau que les plaques partielles (2,4) et recouvrent les ouvertures (9,11) du côté d'une première surface (16) des plaques partielles (2,4), **caractérisé en ce que** les première et seconde surfaces de cuvettes d'une micro-cuvette (7) dans la position active de l'agencement de micro-cuvettes (1) sont mouillées par un volume de liquide (8) amené sur une des surfaces de cuvettes (3,5), de façon à ce que ce volume de liquide (8) soit maintenu entre ces deux surfaces de cuvettes (3, 5) de cette micro-cuvette (7), dans lequel chaque micro-cuvette (7) est libre des surfaces qui contactent le volume de liquide (8) à travers la distance (6) définie.

2. Agencement de micro-cuvettes (1) selon la revendication 1, **caractérisé en ce que** chacune des surfaces de cuvettes (3,5) agencées dans le repère et chacune des ouvertures (9,11) de la première et de la seconde plaques partielles (2,4) sont agencées les unes par rapport aux autres suivant un écartement régulier, lequel écartement correspond à la distance d'axe des puits des plaques de microtitration standard conformément à la norme ANSI.

3. Agencement de micro-cuvettes (1) selon la revendication 1 ou 2, **caractérisé en ce que** chaque corps transparent (10,12) est agencé enclavé au moins partiellement dans la première surface (16) de la première plaque partielle (2) ou de la seconde plaque partielle (4).

4. Agencement de micro-cuvettes (1) selon l'une des revendications précédentes, **caractérisé en ce que** les premières surfaces (16) de la première et de la seconde plaques partielles (2,4) sont en aluminium anodisé ou en alliage d'aluminium anodisé.

5. Agencement de micro-cuvettes (1) selon la revendication 4, **caractérisé en ce que** la première et la seconde plaques partielles (2,4) sont en aluminium noir mat anodisé ou en alliage d'aluminium noir mat anodisé.

6. Agencement de micro-cuvettes (1) selon la revendication 4 ou 5, **caractérisé en ce que** les corps transparents sont en verre, en verre de quartz, en plastique ou en céramique.

7. Agencement de micro-cuvettes (1) selon l'une des revendications précédentes, **caractérisé en ce que** la première plaque partielle (2) et la seconde plaque partielle (4) sont reliées entre elles au moyen d'une articulation (23), par le biais de laquelle une des plaques partielles (2,4) peut pivoter sur l'autre plaque partielle (4,2) pour réaliser la position active de l'agencement de micro-cuvettes (1).

8. Agencement de micro-cuvettes (1) selon l'une des revendications précédentes, **caractérisé en ce que** la première et la seconde plaques partielles (2,4) comportent des entretoises (24) qui sont conçues pour une alimentation mutuelle de sorte que, dans la position active de l'agencement de micro-cuvettes (1) il est défini la distance fixe (6) entre toutes les surfaces de cuvettes se faisant face (3,5) d'un agencement de micro-cuvettes (1).

9. Agencement de micro-cuvettes (1) selon l'une des revendications précédentes, **caractérisé en ce que** la seconde plaque partielle (4) comporte des tiges de guidage (25), lesquelles, dans la position active de l'agencement de micro-cuvettes (1), sont réalisées de façon à plonger dans les renfoncements (26) correspondants de la première plaque partielle (2).

10. Agencement de micro-cuvettes (1) selon l'une des revendications précédentes, **caractérisé en ce que** la seconde plaque partielle (4) ou une plaque de base (21) présente une surface de base (27) qui correspond au moins approximativement à la surface de base d'une plaque de microtitration standard conformément à la norme ANSI.
